# EUROPEAN PATENT APPLICATION

(11) **EP 4 120 447 A1**
(43) Date of publication of application: **18.01.2023**
(21) Application number: 21767741.8
(22) Date of filing: 19.02.2021
(51) Int. Cl.: H01M 50/147, H01M 50/342, H01M 50/531, H01M 50/543, H01M 50/572

(54) **HERMETICALLY SEALED BATTERY**

(30) Priority: 09.03.2020 JP 2020039764
(71) Applicant: SANYO Electric Co., Ltd., Daito-shi Osaka 574-8534 (JP)
(72) Inventor: OKIMOTO, Ryota, Osaka-shi, Osaka 540-6207 (JP); TAKANO, Akira, Osaka-shi, Osaka 540-6207 (JP)
(74) Representative: Novagraaf International SA
(86) International application number: PCT/JP2021/006491
(87) International publication number: WO 2021/182080

(57) **Abstract**

The objective of the present disclosure is to provide a hermetically sealed battery provided with a sealing body which is thin, has a simple construction, and has few components, while maintaining the function thereof as a safety valve. A hermetically sealed battery which is an example of an embodiment is provided with: an electrode body having an electrode tab; an outer can in the shape of a bottomed cylinder for accommodating the electrode body; and a sealing body for closing an opening portion of the outer can. The sealing body includes: a first thin-walled portion formed in an annular shape; a valve portion which surrounds the first thin-walled portion, and which deforms in such a way as to protrude to the outside of the battery when the internal pressure in the battery rises; and a linear second thin-walled portion formed in the valve portion. The electrode tab is disposed in such a way as to intersect the second thin-walled portion, and is joined to an inner surface of the valve portion in such a way as to sandwich the second thin-walled portion.

## Description

### TECHNICAL FIELD

The present disclosure relates to a sealed battery.

### BACKGROUND ART

There has hitherto been widely known a sealed battery comprising a bottomed cylindrical outer housing can and a sealing assembly that closes the opening of the outer housing can (e.g., see Patent Literature 1). As disclosed in Patent Literature 1, the sealing assembly has a structure in which, for example, an internal terminal plate, a lower vent member, an insulating member, an upper vent member, and a cap are laminated in this order. The lower vent member and the upper vent member are connected to each other at central portions thereof, and between respective peripheries thereof, the insulating member is interposed. In this case, when an abnormality occurs in the battery and internal pressure rises, the lower vent member is deformed so as to push the upper vent member toward the cap and is broken, whereby a current path between the lower vent member and the upper vent member is cut off. When the internal pressure further rises, the upper vent member is broken, and gas is discharged from the opening of the cap.

### CITATION LIST

### PATENT LITERATURE

PATENT LITERATURE 1: Japanese Unexamined Patent Application Publication No. 2018-014160

### SUMMARY

### TECHNICAL PROBLEM

As described above, according to the conventional sealing assembly, when an abnormality occurs in the battery and the internal pressure rises, the current path of the battery is cut off, and a gas discharge path is formed, thus ensuring the safety of the battery at the time of occurrence of an abnormality. However, the conventional sealing assembly has problems such as a large thickness, a large number of parts, and complicated shapes of parts. Therefore, there is a need for a sealing assembly having a small thickness, a simple structure, and a small number of parts while ensuring a function as a safety valve.

### SOLUTION TO PROBLEM

A sealed battery according to one aspect of the present disclosure is a sealed battery comprising: an electrode assembly having an electrode tab; an outer housing can in a shape of a bottomed cylinder that accommodates the electrode assembly; and a sealing assembly that closes an opening of the outer housing can. The sealing assembly includes a first thin portion formed in an annular shape, a valve portion that is surrounded by the first thin portion, and deforms to protrude outward of the battery when internal pressure of the battery rises, and a second thin portion in a linear shape formed in the valve portion, and the electrode tab or a metal plate to which the electrode tab is connected is disposed to intersect the second thin portion and is joined to an inner surface of the valve portion to sandwich the second thin portion.

### ADVANTAGEOUS EFFECTS OF INVENTION

According to an aspect of the present disclosure, it is possible to provide a sealed battery comprising a sealing assembly having a small thickness, a simple structure, and a small number of parts while ensuring a function as a safety valve. According to the sealed battery of the present disclosure, for example, when the internal pressure rises due to an abnormality of the battery, the valve portion is deformed so as to protrude outward of the battery, the linear thin portion formed in the valve portion is broken to form an exhaust port, and the electrode tab is detached from the sealing assembly to rapidly cut off the current path of the battery.

### BRIEF DESCRIPTION OF DRAWING

FIG. 1 is a sectional view of a sealed battery that is an example of an embodiment.
FIG. 2 is a bottom view of a sealing assembly that is an example of the embodiment.
FIG. 3 is a sectional view taken along line AA in FIG. 2.
FIG. 4 is a view illustrating a state in which a sealing assembly, which is an example of the embodiment, is inverted and broken.
FIG. 5 is a bottom view of a sealing assembly that is another example of the embodiment.
FIG. 6 is a sectional view taken along line BB in FIG. 5.
FIG. 7 is a view illustrating a state in which the sealing assembly, which is another example of the embodiment, is inverted and broken.

### DESCRIPTION OF EMBODIMENT

An example of an embodiment of the present disclosure will be described below in detail. In the following description, as an example of an embodiment of the sealed battery according to the present disclosure, a cylindrical battery in which a bottomed cylindrical outer housing can 16 accommodates a wound type electrode assembly 14 is exemplified, but the battery may be a square battery comprising a rectangular outer housing can. The electrode assembly may be of a laminated type in which a plurality of positive electrodes and a plurality of negative electrodes are alternately laminated with separators interposed therebetween. In the present specification, for convenience of description, a sealing assembly 17 side is referred to as "upper," and the bottom side of an outer housing can 16 is referred to as "lower."

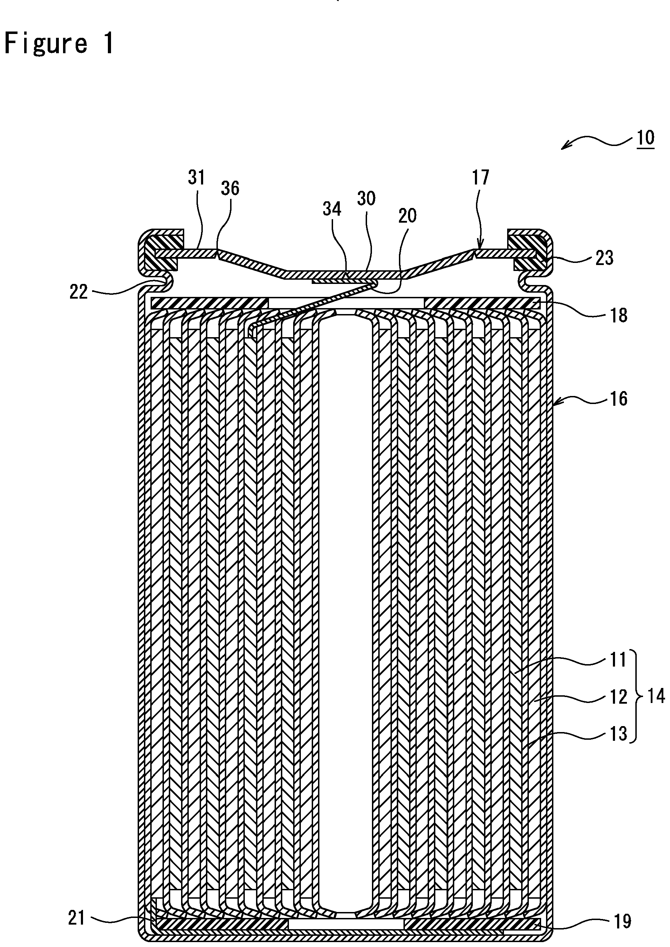

FIG. 1 is a sectional view of a sealed battery 10 that is an example of an embodiment. As illustrated in FIG. 1, a sealed battery 10 comprises an electrode assembly 14, a bottomed tubular outer housing can 16 for accommodating the electrode assembly 14, and a sealing assembly 17 that closes the opening of the outer housing can 16. An electrolyte is accommodated in the outer housing can 16. The electrode assembly 14 includes a positive electrode 11, a negative electrode 12, and a separator 13 interposed between the positive electrode 11 and the negative electrode 12 and has a positive electrode tab 20 and a negative electrode tab 21 as electrode tabs. The electrode tab is generally formed of a strip-shaped metal plate having a thickness larger than that of the core of the electrode. The electrode assembly 14 has a wound structure in which the positive electrode 11 and the negative electrode 12 are wound with the separator 13 interposed therebetween.

The electrolyte may be either an aqueous electrolyte or a non-aqueous electrolyte. An example of the suitable sealed battery 10 is a non-aqueous electrolyte secondary battery using a non-aqueous electrolyte, such as a lithium-ion battery. The non-aqueous electrolyte includes, for example, a non-aqueous solvent and an electrolyte salt dissolved in the non-aqueous solvent. As the non-aqueous solvent, esters, ethers, nitriles, amides, or a mixed solvent of two or more of them may be used. The non-aqueous solvent may contain a halogen substitution in which at least a part of hydrogen in the solvent is substituted with a halogen atom such as fluorine. Note that the non-aqueous electrolyte is not limited to a liquid electrolyte but may be a solid electrolyte. As the electrolyte salt, for example, a lithium salt such as LiPF6 is used.

The electrode assembly 14 includes the elongated positive electrode 11, the elongated negative electrode 12, two elongated separators 13, the positive electrode tab 20 joined to the positive electrode 11, and the negative electrode tab 21 joined to the negative electrode 12. The negative electrode 12 is formed to have a size larger than that of the positive electrode 11 in order to prevent the precipitation of lithium. That is, the negative electrode 12 is formed to be longer than the positive electrode 11 in the longitudinal direction and the shorter direction (vertical direction). The two separators 13 are formed to have at least one size larger than the positive electrode 11 and are disposed to sandwich the positive electrode 11, for example.

The positive electrode 11 has a positive electrode core and positive electrode mixture layers provided on both sides of the positive electrode core. As the positive electrode core, it is possible to use a foil of a metal stable in the potential range of the positive electrode 11, such as aluminum or an aluminum alloy, a film in which the metal is disposed on the surface layer, or the like. The positive electrode mixture layer includes a positive electrode active material, a conductive agent such as acetylene black, and a binder such as a polyvinylidene fluoride (PVdF). The positive electrode 11 can be produced by coating a positive electrode mixture slurry including a positive electrode active material, a conductive agent, a binder, and the like on the positive electrode core, drying the coating film, and then compressing the coating film to form positive electrode mixture layers on both sides of the positive electrode core.

As the positive electrode active material, for example, a lithium transition metal complex oxide is used. Examples of the metal element contained in the lithium transition metal complex oxide include Ni, Co, Mn, Al, B, Mg, Ti, V, Cr, Fe, Cu, Zn, Ga, Sr, Zr, Nb, In, Sn, Ta, W, and the like. An example of a suitable lithium transition metal complex oxide is a lithium metal complex oxide containing at least one of Ni, Co, and Mn. Specific examples include composite oxides containing Ni, Co, and Mn and composite oxides containing Ni, Co, and Al.

The negative electrode 12 has a negative electrode core and negative electrode mixture layers provided on both surfaces of the negative electrode core. As the negative electrode core, it is possible to use a foil of a metal stable in the potential range of the negative electrode 12, such as copper or copper alloy, a film in which the metal is disposed on the surface layer, or the like. The negative electrode mixture layer includes a negative electrode active material and a binder such as styrene-butadiene rubber (SBR). The negative electrode 12 can be produced by applying a negative electrode mixture slurry including a negative electrode active material, a binder, and the like on the negative electrode core, drying the coating film, and then compressing the coating film to form negative electrode mixture layers on both sides of the negative electrode core.

As the negative electrode active material, for example, a carbon-based active material is used, which is natural graphite such as scaly graphite, massive graphite, or earthy graphite, artificial graphite such as massive artificial graphite or graphitized mesophase carbon microbeads, or the like. As the negative electrode active material, an element which is alloyed with lithium, such as Si and Sn, an alloy containing the element, a compound containing the element, or the like may be used, and these may be used in combination with the carbon-based active material.

Insulating plates 18, 19 are disposed above and below the electrode assembly 14, respectively. In the example illustrated in FIG. 1, the positive electrode tab 20 attached to the positive electrode 11 passes through the through hole of the insulating plate 18 and extends toward the sealing assembly 17, and the negative electrode tab 21 attached to the negative electrode 12 passes through the outside of the insulating plate 19 and extends to the bottom side of the outer housing can 16. The positive electrode tab 20 is connected to the inner surface of the sealing assembly 17 facing the inside of the battery by welding or the like, and the sealing assembly 17 serves as a positive electrode external terminal. The negative electrode tab 21 is connected to the bottom inner surface of the outer housing can 16 by welding or the like, and the outer housing can 16 serves as a negative electrode external terminal. Note that the negative electrode tab 21 may be connected to the inner surface of the sealing assembly 17, and in this case, the sealing assembly 17 serves as a negative electrode external terminal.

The outer housing can 16 is, for example, a metal container having a bottomed cylindrical shape. A resin gasket 23 is provided between the outer housing can 16 and the sealing assembly 17. A gap between the outer housing can 16 and the sealing assembly 17 is closed by a gasket 23, and the inside of the battery is sealed hermetically. The outer housing can 16 has a grooved portion 22 formed on a side surface portion by spinning from the outside of the side surface portion, for example, and supports the sealing assembly 17. The grooved portion 22 is preferably formed in an annular shape along the circumferential direction of the outer housing can 16 and supports the sealing assembly 17 on the upper surface of the outer housing can 16. The upper end of the outer housing can 16 is bent inward of the can and caulked to the periphery of the sealing assembly 17.

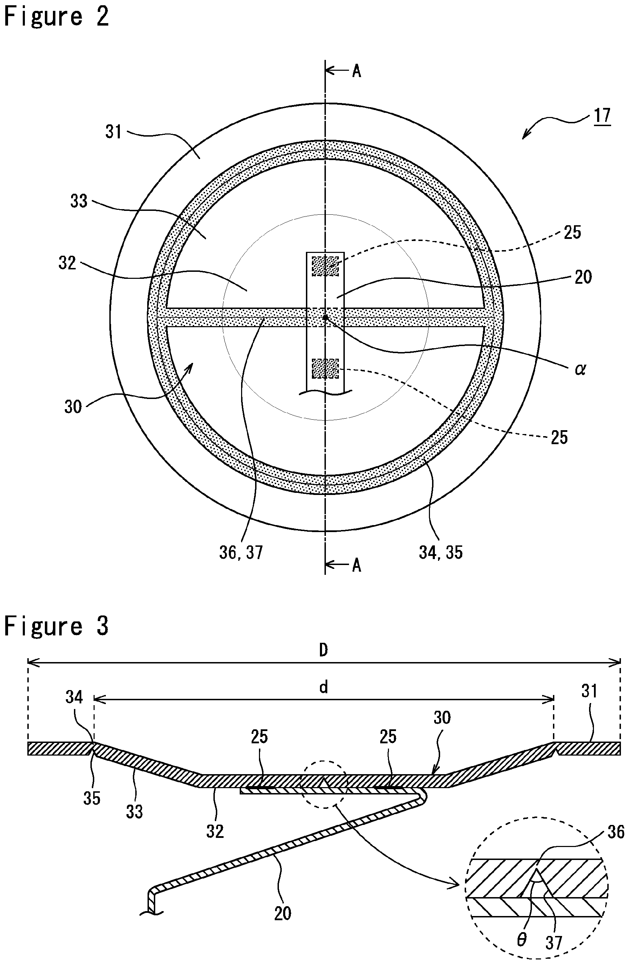

Hereinafter, the sealing assembly 17 will be described in detail with further reference to FIGS. 2 to 4. FIG. 2 is a bottom view of the sealing assembly 17, and FIG. 3 is a sectional view taken along line AA in FIG. 2.

As illustrated in FIGS. 2 and 3, the sealing assembly 17 has a first thin portion 34 formed in an annular shape. The sealing assembly 17 has a valve portion 30 surrounded by the first thin portion 34, an annular portion 31 located outside the first thin portion 34, and a linear second thin portion 36 formed in the valve portion 30. The valve portion 30 is a portion that is deformed so as to protrude outward of the battery when an abnormality occurs in the battery and the internal pressure rises. The first thin portion 34 is a portion having a thickness smaller than the valve portion 30 (excluding a portion where the second thin portion 36 is formed) and the annular portion 31, and serving as a starting point of deformation of the valve portion 30 when the internal pressure rises.

The sealing assembly 17 is fixed to the outer housing can 16 by the annular portion 31 being held between the upper end of the outer housing can 16 and the grooved portion 22 via the gasket 23. On the other hand, the valve portion 30 is not held between the upper end of the outer housing can 16 and the grooved portion 22 and is deformable when the internal pressure rises. The sealing assembly 17 is formed of a single metal plate including the valve portion 30 and the annular portion 31 divided by the first thin portion 34. Therefore, the sealing assembly 17 has advantages such as a small thickness, a simple structure, and a small number of parts.

In the sealed battery 10, the positive electrode tab 20 is joined to the inner surface of the valve portion 30 by welding or the like. External wiring connected to an electric product (not illustrated), another sealed battery 10, or the like is connected to the outer surface of the sealing assembly 17 by welding or the like. Note that the external wiring may be connected to either the valve portion 30 or the annular portion 31 as long as being located so as not to prevent the inversion or breakage of the valve portion 30.

The valve portion 30 has a downward convex shape protruding inward of the battery and is configured to protrude outward of the battery when the internal pressure rises. As will be described in detail later, when the internal pressure reaches a predetermined pressure, the valve portion 30 is inverted so as to have an upward convex shape protruding outward of the battery. Then, the second thin portion 36 is broken to form an exhaust port, and the positive electrode tab 20 is detached from the valve portion 30 to cut off the current path of the battery. After the inversion of the valve portion 30 and before the breakage of the second thin portion 36, the positive electrode tab 20 may be detached from the valve portion 30 to cut off the current path.

The metal plate constituting the sealing assembly 17 is, for example, an aluminum alloy plate containing aluminum as a main component. The thickness of the metal plate is not particularly limited, but as an example, the thickness is 0.3 mm to 2 mm in a portion except for the first thin portion 34 and the second thin portion 36. The thicknesses of the valve portion 30 and the annular portion 31 may be the same or different. The sealing assembly 17 is manufactured, for example, by forming the annular first thin portion 34 and the linear second thin portion 36 on the single metal plate and pressing the valve portion 30 surrounded by the first thin portion 34 into a downward convex shape.

In the present embodiment, the annular first thin portion 34 is formed by the annular first groove 35. The first groove 35 is formed on the inner surface of the sealing assembly 17 but can be formed on the outer surface of the sealing assembly 17. The thickness of the first thin portion 34 is, for example, 10% to 50% of the maximum thickness of the valve portion 30 and can be adjusted by changing the depth of the first groove 35. The first thin portion 34 is preferably formed thicker than the second thin portion 36.

The first thin portion 34 (first groove 35) is preferably formed in a circular shape without corners in bottom view, and particularly preferably formed in a substantially perfect circular shape as illustrated in FIG. 2. Here, the term "substantially perfect circular shape" means a perfect circular shape or a shape recognized as a substantially perfect circle. The first groove 35 illustrated in FIG. 3 is formed in a substantially triangular shape in cross section, but the sectional shape of the first groove 35 is not limited to a triangular shape but may be, for example, a semicircular shape or a quadrangular shape.

Note that the first thin portion 34 is not limited to the linear thin portion formed by the first groove 35 but may be, for example, a wide thin portion in which the thickness of the metal plate continuously decreases from the inner side to the outer side of the sealing assembly 17 in the radial direction.

The valve portion 30 preferably has a substantially perfect circular shape in bottom view. In this case, the valve portion 30 is smoothly inverted when the internal pressure rises. As described above, the valve portion 30 and the annular portion 31 are separated by the first thin portion 34 (first groove 35), so that the shapes of the valve portion 30 and the annular portion 31 in bottom view are determined by the shape of the first thin portion 34 in bottom view. When the valve portion 30 has a perfect circular shape in bottom view, the annular portion 31 is formed in an annular shape in bottom view.

A diameter d of the valve portion 30 is, for example, 50% to 90%, preferably 55% to 85%, of a diameter D of the sealing assembly 17. When "diameter d / diameter D" is within this range, the sealing assembly 17 can be stably fixed to the outer housing can 16, and at the time of occurrence of an abnormality, a large exhaust port can be formed, and gas can be discharged smoothly.

The valve portion 30 has a downward convex shape protruding inward in a normal use state in which the internal pressure of the battery is low. That is, the valve portion 30 is recessed inward as viewed from the outside of the battery. The valve portion 30 bulges toward the electrode assembly 14 in a range where the valve portion 30 is not in contact with the electrode assembly 14. The shape of the valve portion 30 is not particularly limited as long as being deformable into an upward convex shape by internal pressure. However, the shape of the valve portion 30 is preferably a shape that can be inverted from a downward convex shape to an upward convex shape, and may be, for example, a shape formed by the whole valve portion 30 being curved in a dome shape.

In the present embodiment, the valve portion 30 has a flat bottom 32 that bulges most toward the electrode assembly 14, and an annular inclined portion 33 formed around the bottom 32. In the example illustrated in FIG. 3, the inclined portion 33 is formed to have a constant gradient from the bottom 32 toward the annular portion 31, and a bent portion exists at the boundary between the bottom 32 and the inclined portion 33. The bottom 32 is formed substantially in parallel with the annular portion 31 and disposed substantially in parallel with the bottom of the outer housing can 16. The bottom 32 has a substantially perfect circular shape in bottom view, and the inclined portion 33 is formed in an annular shape in bottom view so as to surround the bottom 32.

As described above, the linear second thin portion 36 is formed in the valve portion 30. The second thin portion 36 is thinner than the first thin portion 34 and breaks preferentially over the first thin portion 34 when the internal pressure rises due to, for example, an abnormality of the battery. The second thin portion 36 is formed only on the valve portion 30. The sealing assembly 17 is configured such that an exhaust port is formed by the breakage of the second thin portion 36.

The second thin portion 36 is formed by a linear second groove 37. The second groove 37 preferably has the shape of a straight line but may be slightly bent as long as having the shape of a line. The second groove 37 is formed on the inner surface of the valve portion 30 but can be formed on the outer surface. The thickness of the second thin portion 36 is, for example, 30% to 90%, preferably 50% to 80%, of the maximum thickness of the valve portion 30 and can be adjusted by changing the depth of the second groove 37.

In the present embodiment, one second thin portion 36 is formed along the radial direction of the first thin portion 34 passing through a center α of the first thin portion 34 formed in the annular shape, that is, a center α of the valve portion 30. Stress is concentrated in the central portion of the valve portion 30 at the time of deformation of the valve portion 30, so that when the second thin portion 36 is formed to pass through the center α, the second thin portion 36 is easily broken with the deformation of the valve portion 30. The second thin portion 36 is formed over the entire radial length of the valve portion 30 and is connected to the first thin portion 34. The second groove 37 illustrated in FIG. 3 is formed in a substantially triangular shape in cross section, but the second groove 37 may be formed in a semicircular shape or a quadrangular shape, for example.

In order to break the second thin portion 36 (second groove 37) preferentially over the first thin portion 34 (first groove 35), the shapes of the grooves forming the respective thin portions may be made different from each other. For example, the first groove 35 may have a semicircular shape in cross section, and the second groove 37 may have a triangular shape in cross section. Alternatively, each of the grooves may have a triangular shape in cross section, and an angle θ of the triangle at the depth of the groove may be made different. For example, two or more second thin portions 36 may be formed in a range where the joining of the positive electrode tab 20 is not hindered, or may be formed in a cross shape so as to intersect at the center α of the valve portion 30.

In the sealed battery 10, the positive electrode tab 20 is disposed to intersect the second thin portion 36 and is joined to the inner surface of the valve portion 30 by welding or the like so as to sandwich the second thin portion 36. The positive electrode tab 20 overlaps the second thin portion 36 in the vertical direction and intersects the second thin portion 36 as viewed from the bottom of the sealing assembly 17. Note that the leading end of the positive electrode tab 20 is bent along the bottom 32 of the valve portion 30 and is in contact with the inner surface of the bottom 32. In order not to inhibit the deformation of the valve portion 30, it is preferable that the leading end of the positive electrode tab 20 be disposed not to project from the bottom 32, and the bent portion of the positive electrode tab 20 be formed in a range overlapping the bottom 32.

In the example illustrated in FIG. 2, the leading end of the positive electrode tab 20 along the bottom 32 is disposed to be orthogonal to the second thin portion 36 (second groove 37) at the center α of the valve portion 30. The positive electrode tab 20 is welded to the inner surface of the bottom 32 of the valve portion 30, which is a portion separated radially outward of the valve portion 30 by a predetermined length from both ends in the width direction of the second groove 37. As will be described in detail later, since the positive electrode tab 20 intersects the second thin portion 36 and is welded to the valve portion 30 so as to sandwich the second thin portion 36, when the valve portion 30 is inverted and the second thin portion 36 is broken, the welding portion 25 of the positive electrode tab 20 is broken to cut off the current path of the battery.

On the inner surface of the valve portion 30, the welding portions 25 are formed at least two locations on both sides in the width direction of the second groove 37. For example, the length from the second groove 37 to each welding portion 25 is substantially the same, and each welding portion 25 is formed to have substantially the same size. In this case, when the second thin portion 36 is broken, the two welding portions 25 are likely to be broken simultaneously. The length from the second groove 37 to the welding portion 25 is, for example, 50% or less, preferably 30% or less, and more preferably 20% or less, of the radius of the valve portion 30. The welding portion 25 is preferably formed in the vicinity of the second groove 37 in a range not overlapping the second groove 37.

The positive electrode tab 20 is preferably disposed at the center α of the valve portion 30 as described above. The two welding portions 25 formed on both sides in the width direction of the second groove 37 are preferably aligned in the radial direction of the valve portion 30. In this case, when the valve portion 30 is inverted and the second thin portion 36 is broken, the two welding portions 25 are likely to be broken simultaneously. When the positive electrode tab 20 is directly welded to the inner surface of the valve portion 30, it is preferable that the positive electrode tab 20 and the second groove 37 be substantially orthogonal to each other as viewed from the bottom of the sealing assembly 17.

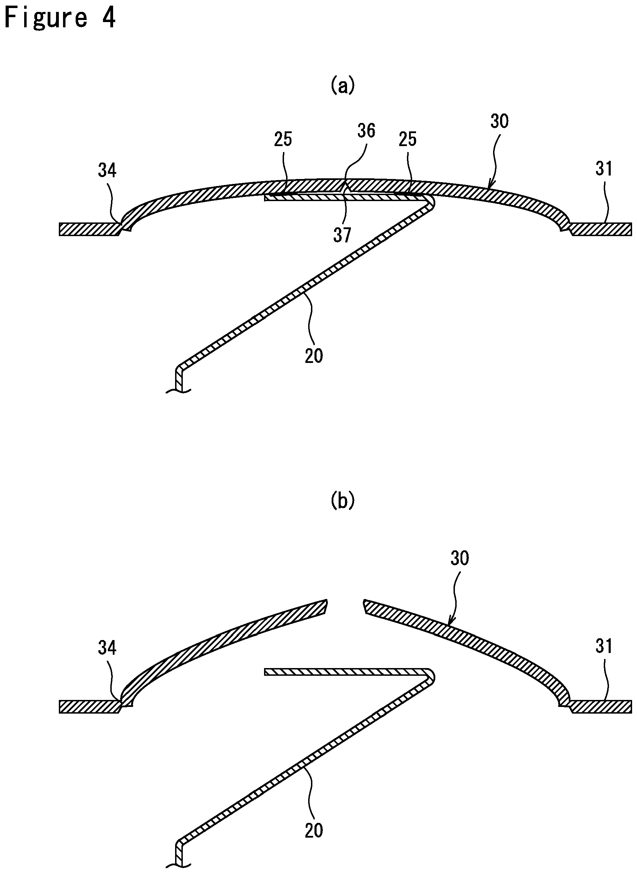

FIG. 4 is a view illustrating a state in which the sealing assembly 17 comprising the above configuration is inverted and broken. When the internal pressure rises due to an abnormality of the sealed battery 10, as illustrated in FIG. 4(a), the valve portion 30 having a downward convex shape protruding inward of the battery is inverted with the first thin portion 34 as a starting point and becomes an upward convex shape protruding outward of the battery. At this time, in the example illustrated in FIG. 4(a), the welding portion 25 of the positive electrode tab 20 is not broken, and the sealing assembly 17 and the positive electrode tab 20 are in an electrically connected state.

When the internal pressure of the battery further rises, as illustrated in FIG. 4(b), the linear second thin portion 36 formed in the valve portion 30 is broken. An exhaust port through which the gas is discharged is formed in the valve portion 30, and the positive electrode tab 20 is detached from the valve portion 30 to cut off the current path of the battery. Since the positive electrode tab 20 is welded to the inner surface of the valve portion 30 so as to sandwich the second thin portion 36, when the second thin portion 36 is broken and the valve portion 30 opens, the welding portion 25 is strongly pulled upward and radially outward of the sealing assembly 17, whereby the welding portion 25 is broken.

In the example illustrated in FIG. 4, the breakage of the second thin portion 36 has led to the breakage of the welding portion 25 to cut off the current path. However, the current path may be cut off when the valve portion 30 is inverted and becomes an upward convex shape, and then the second thin portion 36 may be broken to form the exhaust port.

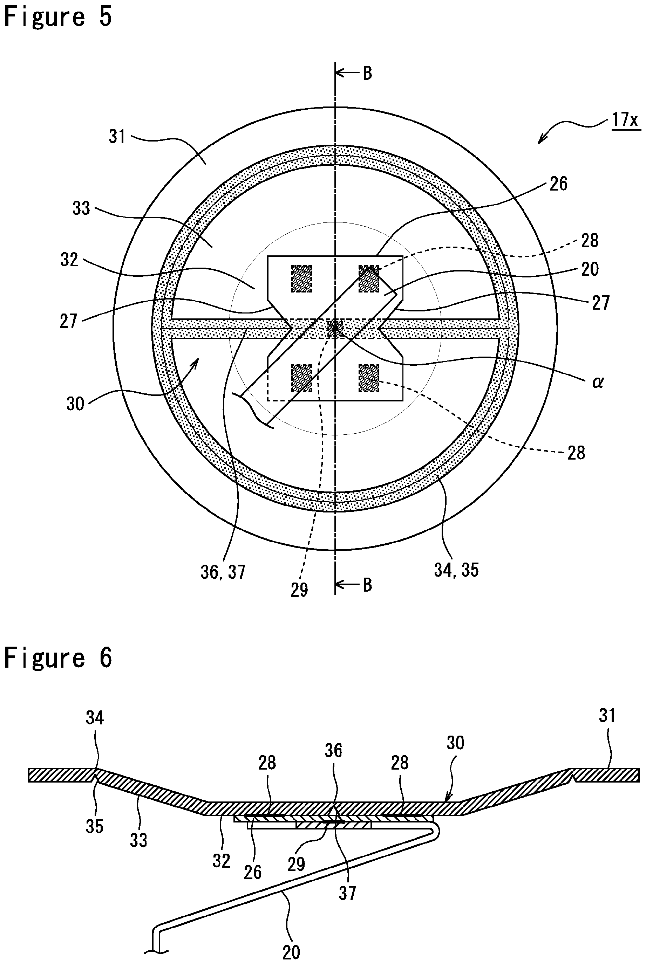

With reference to FIGS. 5 to 7, a sealing assembly 17x as another example of the embodiment will be described in detail below. FIG. 5 is a bottom view of the sealing assembly 17x, and FIG. 6 is a sectional view taken along line BB in FIG. 5. In the following description, the same reference numerals are used for the same components as those in the embodiment described above, and the redundant description thereof is omitted.

As illustrated in FIGS. 5 and 6, the sealing assembly 17x differs from the sealing assembly 17 in which the positive electrode tab 20 is directly welded to the inner surface of the valve portion 30 in that the sealing assembly 17x includes a tab welding plate 26 joined to the inner surface of the valve portion 30 and that the positive electrode tab 20 is electrically connected to the valve portion 30 via the tab welding plate 26. The tab welding plate 26 is a metal plate disposed to intersect the second thin portion 36. In the present embodiment, the tab welding plate 26 is welded to portions located on both sides of the second thin portion 36 so as to sandwich the second thin portion 36 with respect to the inner surface of the valve portion 30, and the positive electrode tab 20 is welded to the lower surface of the tab welding plate 26. In the example illustrated in FIG. 5, a welding portion 29 of the positive electrode tab 20 to the tab welding plate 26 is formed at a position overlapping the center α of the valve portion 30.

When the positive electrode tab 20 is directly welded to the inner surface of the valve portion 30, by welding the positive electrode tab 20 so as to be orthogonal to the second thin portion 36, the second thin portion 36 is easily broken when the internal pressure rises, and the current path is easily cut off. For this reason, the positive electrode tab 20 is preferably aligned so as to be orthogonal to the second thin portion 36, but the use of the tab welding plate 26 eliminates the need for such alignment. That is, when the tab welding plate 26 is welded in advance so as to sandwich the second thin portion 36, the positive electrode tab 20 may be welded to the tab welding plate 26 without concern for the direction of the positive electrode tab 20 with respect to the second thin portion 36.

The tab welding plate 26 may be a metal plate having a size capable of being disposed across the second thin portion 36 (second groove 37) and capable of welding the positive electrode tab 20, and the shape of the tab welding plate 26 is not particularly limited. However, the tab welding plate 26 is preferably smaller than the bottom 32 of the valve portion 30 so as not to inhibit the deformation of the valve portion 30. Further, the tab welding plate 26 is preferably broken together with the second thin portion 36, and for example, the tab welding plate 26 has a thickness similar to that of the second thin portion 36.

In the example illustrated in FIG. 5, a substantially quadrangular tab welding plate 26 is disposed at the center α of the valve portion 30, and the welding portions 28 are formed at four corners of the tab welding plate 26 so as to sandwich the second groove 37. Each welding portion 28 is formed, for example, at a position substantially equidistant from the center α of the valve portion 30. The welding portions 28 formed on both sides in the width direction of the second groove 37 are aligned in the radial direction of the valve portion 30.

Two notches 27 are formed in the tab welding plate 26 at positions overlapping the second groove 37. The two notches 27 are formed on two sides of the quadrangle opposite to each other while being aligned in a direction in which the second thin portion 36 extends, and the two notches 27 serve as starting points when the tab welding plate 26 is broken. In the example illustrated in FIG. 5, the notch 27 having a triangular shape in bottom view is formed, and the tab welding plate 26 is disposed such that the apex of the notch 27 overlaps the second groove 37. In the tab welding plate 26, a thin portion may be formed in a portion substantially overlapping the second thin portion 36 along the direction in which the second thin portion 36 extends, or a thin portion may be formed so as to connect the two notches 27.

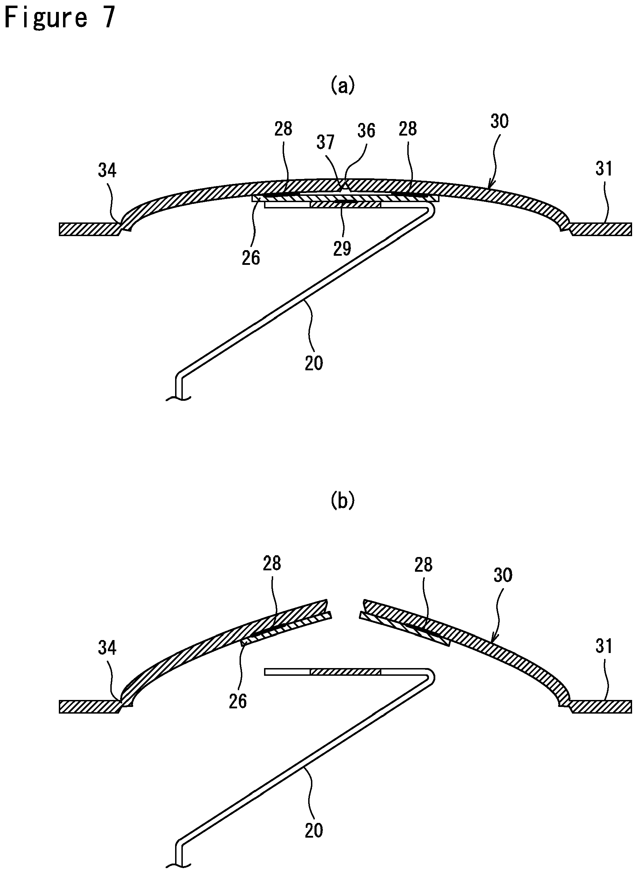

FIG. 7 is a view illustrating a state in which the sealing assembly 17x comprising the above configuration is inverted and broken. When the internal pressure rises due to an abnormality of the sealed battery 10, as illustrated in FIG. 7(a), the valve portion 30 is inverted with the first thin portion 34 as a starting point and becomes an upward convex shape. When the internal pressure of the battery further rises, as illustrated in FIG. 7(b), the tab welding plate 26 is broken at the same time as the second thin portion 36 is broken. Then, an exhaust port for releasing the gas is formed in the valve portion 30, and the positive electrode tab 20 is detached from the tab welding plate 26 to cut off the current path of the battery.

In the example illustrated in FIG. 7, the welding portion 29 has been broken by the breakage of the tab welding plate 26 to cut off the current path. However, when the valve portion 30 is inverted and becomes an upward convex shape, the welding portion 29 may be broken, and the positive electrode tab 20 may be detached from the tab welding plate 26.

As described above, the sealing assemblies 17, 17x each have excellent performance as a safety valve and have advantages such as a small thickness, a simple structure, and a small number of parts. Therefore, by using the sealing assemblies 17, 17x, for example, the manufacturing cost of the sealed battery 10 can be reduced, and the energy density can be improved.

Note that the design of the embodiment described above can be appropriately modified to the extent that the object of the present disclosure is not impaired. For example, in the embodiment described above, the sealing assemblies 17, 17x each including the downward-convex valve portion 30 have been exemplified, but the valve member may not have a downward convex shape, and the sealing assembly may have a flat disk shape. The tab welding plate 26 having two notches 27 has been exemplified, but the number of notches 27 may be one. Alternatively, instead of the tab welding plate 26, a metal plate without the notch 27 may be used.

### REFERENCE SIGNS LIST

10 sealed battery, 11 positive electrode, 12 negative electrode, 13 separator, 14 electrode assembly, 16 outer housing can, 17, 17x sealing assembly, 18, 19 insulating plate, 20 positive electrode tab, 21 negative electrode tab, 22 grooved portion, 23 gasket, 25, 28, 29 welding portion, 26 tab welding plate, 27 notch, 30 valve portion, 31 annular portion, 32 bottom, 33 inclined portion, 34 first thin portion, 35 first groove, 36 second thin portion, 37 second groove

## Claims

1. A sealed battery comprising:
an electrode assembly having an electrode tab;
an outer housing can in a shape of a bottomed cylinder that accommodates the electrode assembly; and
a sealing assembly that closes an opening of the outer housing can, wherein
the sealing assembly includes
a first thin portion formed in an annular shape,
a valve portion that is surrounded by the first thin portion, and deforms to protrude outward of the battery when internal pressure of the battery rises, and
a second thin portion in a linear shape formed in the valve portion, and
the electrode tab or a metal plate to which the electrode tab is connected is disposed to intersect the second thin portion and is joined to an inner surface of the valve portion to sandwich the second thin portion.

2. The sealed battery according to claim 1, wherein
the first thin portion is formed in an annular shape by an annular groove, and
the second thin portion passes through a center of the first thin portion and is formed in a linear shape along a radial direction of the first thin portion.

3. The sealed battery according to claim 1 or 2, wherein the second thin portion is thinner than the first thin portion.

4. The sealed battery according to any one of claims 1 to 3, wherein the valve portion has a shape protruding inward of the battery, and is configured to protrude outward of the battery when the internal pressure rises.

5. The sealed battery according to any one of claims 1 to 4, wherein a notch is formed in the metal plate at a position overlapping the second thin portion.
